# EUROPEAN PATENT APPLICATION

(11) **EP 4 618 380 A1**
(43) Date of publication of application: **17.09.2025**
(21) Application number: 23891978.1
(22) Date of filing: 14.11.2023
(51) Int. Cl.: H02K 15/00, B23K 37/04, B23Q 7/14

(54) **HAIRPIN ARRANGEMENT APPARATUS**

(30) Priority: 14.11.2022 KR 20220151878
(71) Applicant: LG Electronics Inc., Yeongdeungpo-gu Seoul 07336 (KR)
(72) Inventor: KIM, Sunkee, Seoul 06772 (KR); LEE, Seungjin, Seoul 06772 (KR); LEE, Seunghoon, Seoul 06772 (KR); CHOI, Yujin, Seoul 06772 (KR)
(74) Representative: Schott, Jakob Valentin
(86) International application number: PCT/KR2023/018277
(87) International publication number: WO 2024/106911

(57) **Abstract**

An embodiment of the present specification relates to a hairpin arrangement apparatus in which horizontally expandable clampers are disposed between rows of hairpins, and arrangement pins are inserted into the clampers to horizontally expand the clampers, so that the hairpins are horizontally arranged by means of the expanded clampers, thereby arranging the hairpins in pairs to be welded, without any variation in the heights of the hairpins.

## Description

### Technical Field

An embodiment relates to an apparatus that aligns hairpins of a stator prior to welding.

### Background Art

A structure of an automobile drive motor has a number of hairpin windings positioned in a stator, and welding is required to electrically connect them. Those hairpin windings (hereinafter, referred to as hairpins) are not aligned for welding, and thus alignment is required prior to welding. Technologies for aligning hairpins prior to welding include aligning individual hairpins and aligning all windings at once, but a technology of individually aligning hairpins has a problem in that it takes a lot of time, which reduces productivity, while a technology of collectively aligning all hairpins has a problem in that the hairpins are not aligned accurately as pairs during alignment.

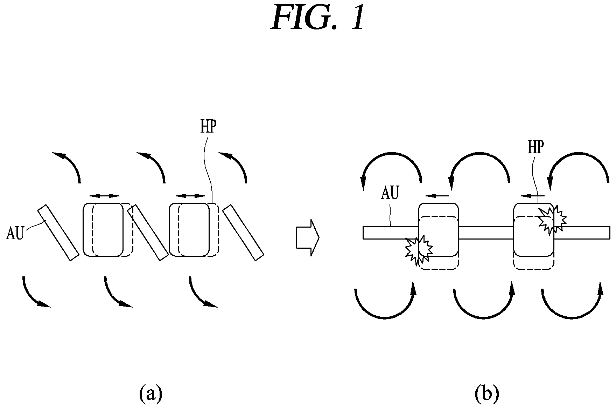

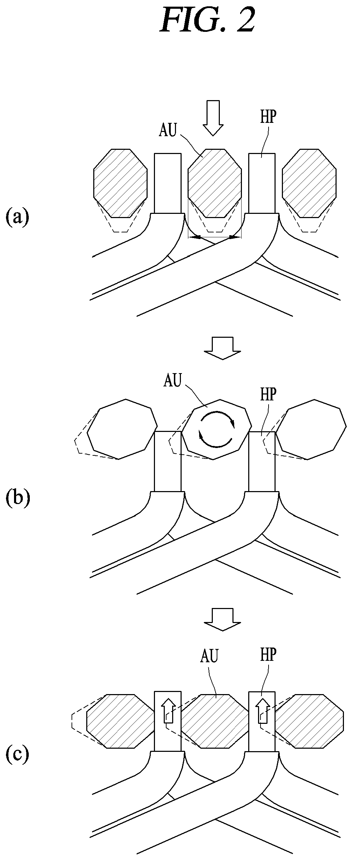

As a prior art for such a collective alignment method, Prior Art Document 1 (Korean Patent Publication No. 10-2021-0058117) discloses a technology that aligns hairpins by rotating alignment elements consisting of partition protrusions, and Prior Art Document 2 (Korean Patent Publication No. 10-2022-0060174) discloses a technology that aligns hairpins by rotating alignment elements having elliptical cross-sections. In the case of Prior Art Document 1, as shown in FIG. 1, heights of hairpins HPs may be distorted as partition projections AUs rise or fall depending on a direction of rotation, and in the case of Prior Art Document 2, as shown in FIG. 2, as arrangement elementsAUs having elliptical cross-sections rotate, hairpins HPs in close contact may be pushed up or down, which may cause vertical alignment to be disturbed.

As such, conventional alignment technologies have a problem of generating a step between hairpins by changing the heights of the hairpins during an alignment process, and when a step is generated, it causes a problem that makes welding difficult. In addition, due to a change in the heights of the hairpins, it becomes difficult to provide a protective element to protect the hairpins from welding on a top of the hairpins, so it has to be constructed with a structure that is vulnerable to welding.

That is, conventional technologies have difficulty in accurately aligning the hairpins vertically, and the inaccuracy of alignment and structural constraints result in limitations that make it difficult to easily perform welding.

### Disclosure of Invention

### Technical Problem

An aspect of the present disclosure is intended to improve the foregoing limitations of the related art.

Accordingly, the present specification is intended to provide an embodiment that can accurately align a position without variations in heights of hairpins.

In addition, it is intended to provide an embodiment in which hairpins can be aligned to facilitate welding.

Furthermore, it is intended to provide an embodiment that can collectively align hairpins.

In addition, it is intended to provide an embodiment that can align hairpins with a simple configuration.

### Solution to Problem

In order to solve the foregoing problems, the present disclosure uses a method of aligning hairpins in a horizontal alignment manner as a solution means.

Specifically, the technical feature is to horizontally place the hairpins by aligning horizontally expanding clampers between arrangements of hairpins, and inserting an alignment pin into the clampers to horizontally expand the clampers, thereby horizontally aligning the hairpins through the expanded clampers.

Accordingly, the hairpins may be aligned for each pair of welding targets without variations in heights of the hairpins.

The technical features may be applied to an apparatus for aligning a hairpin, an apparatus for assembling a hairpin, and a mounting apparatus for welding a hairpin, and the present specification provides an embodiment of a hairpin aligning apparatus according to the technical features.

In order to solve the foregoing problems, an embodiment of a hairpin alignment apparatus may include a fixing unit that raises and fixes a stator having a plurality of hairpins protruding from a top thereof, which are arranged in a plurality of rows and a plurality of columns along an arc, to a specific position, a clamping unit including a plurality of clampers provided at positions respectively corresponding to between the plurality of columns, and respectively disposed between the plurality of columns when the stator is raised to the specific position, and an alignment unit including a plurality of alignment pins that are inserted into insertion holes of the respective plurality of clampers when the plurality of clampers are respectively positioned between the plurality of columns to horizontally expand the respective plurality of clampers so as to come into close contact with the hairpins arranged in columns on both sides.

The stator may have the plurality of hairpins arranged in even rows.

The specific position may be a position where the plurality of hairpins protrude to a predetermined length or more from positions where the plurality of clampers are disposed when the plurality of clampers are respectively disposed between the plurality of columns.

The respective plurality of clampers may have a front end disposed in a center direction of the stator and a rear end disposed in a circumferential direction of the stator.

The respective plurality of clampers may have a shape in which the width increases from the front end to the rear end.

The respective plurality of clampers may have the insertion hole disposed at the rear end such that the alignment pin is inserted into the rear end, advances toward the front end, and expands horizontally by a width of the alignment pin.

The respective plurality of clampers may have a plurality of alignment teeth disposed on both sides corresponding to the arrangement of the plurality of rows.

The alignment teeth may be disposed at a regular interval in a number corresponding to a number of pairs of hairpins arranged in the plurality of rows on respective both sides of the clamper.

When the clamper is horizontally expanded to come into contact with the hairpins arranged in columns on both sides, the alignment teeth may cause the hairpins arranged in the plurality of rows to allow two of them to come into close contact with each other.

The respective plurality of clampers may be provided with one or more O-rings that expand when the alignment pin is inserted and contract when the alignment pin is extracted.

At least one of the O-rings may be provided at an end of the clamper.

The alignment unit may further include a driving element that moves the plurality of alignment pins so as to be inserted into or extracted from the insertion holes.

The plurality of alignment pins may be inserted into the insertion holes to move forward at a constant speed.

The plurality of alignment pins may be simultaneously inserted into the respective insertion holes of the plurality of clampers.

The plurality of alignment pins may be inserted into the insertion holes so as to allow the plurality of clampers to be horizontally expanded, and then maintained in an inserted state for a predetermined period of time.

The plurality of alignment pins may be disposed with a horizontal width less than a sum of distances between both sides of the clamper and both columns of hairpins when the clamper is disposed between the both columns.

The hairpin alignment apparatus may further include a cover unit in which a plurality of protruding holes are disposed at positions respectively corresponding to arrangements of the plurality of columns so as to allow the plurality of hairpins to protrude by passing through the plurality of protruding holes when the stator is positioned at the specific position.

The cover unit may have a disc shape provided on a top of the plurality of clampers.

The cover unit may allow the plurality of hairpins to pass through the protruding holes so as to protrude from the protruding holes by a predetermined length or more.

The protruding hole may be disposed to have an area exceeding an area of one column of the hairpins, but within 1.2 times the area.

### Advantageous Effects of Invention

According to an embodiment of a hairpin alignment apparatus as described above, clampers may be expanded horizontally to align hairpins, thereby having an effect of preventing the hairpins from moving up and down and their heights from varying during an alignment process.

Accordingly, there is also an effect capable of accurately aligning the positions of the hairpins for each pair of welding targets without disturbing the height alignment of the hairpins.

Additionally, the clampers may expand horizontally to align the hairpins, thereby having an effect of performing the alignment of the hairpins regardless of the clamping heights.

Accordingly, not only may clamping be performed at winding covering portions of the hairpins, but also welding target portions of the hairpins may be sufficiently secured, thereby having an effect of securing a space for a welding protection cover.

Due to the effects of accurately aligning the positions of the hairpins for each pair of welding targets and securing a space for the welding target portions and welding protection cover, welding may be made easier, thereby having an effect of allowing welding to be performed accurately and stably.

Moreover, welding may be performed accurately and stably, and there is also an effect of improving the quality of the motor.

Besides, hairpins may be collectively aligned so as to minimize a period of time spent on alignment, thereby having an effect of improving productivity.

The effects according to an embodiment of the foregoing hairpin alignment apparatus is not limited to those described above, and may also include effects described in the detailed description below or inferred/derived from the detailed description.

### Brief Description of Drawings

FIG. 1 is Exemplary Diagram 1 showing a hairpin alignment method in the related art.
FIG. 2 is Exemplary Diagram 2 showing a hairpin alignment method in the related art.
FIG. 3 is a perspective view showing an example of a stator in which a plurality of hairpins are protruded.
FIG. 4 is a plan view of the stator shown in FIG. 3.
FIG. 5 is a configuration diagram according to an embodiment of a hairpin alignment apparatus.
FIG. 6 is a front view showing a specific example of the hairpin alignment apparatus shown in FIG. 5.
FIG. 7 is Perspective View 1 of the hairpin alignment apparatus shown in FIG. 6.
FIG. 8 is Perspective View 2 of the hairpin alignment apparatus shown in FIG. 6.
FIG. 9 is an enlarged partial cross-sectional view of a portion shown in FIGS. 6 and 7.
FIG. 10 is a simplified exemplary diagram showing a structure of a stator.
FIG. 11 is a simplified exemplary diagram showing a configuration according to an embodiment of a clamping unit.
FIG. 12 is an exemplary diagram showing a configuration according to an embodiment of a clamper and an alignment pin.
FIG. 13 is an exemplary diagram showing a horizontal expansion concept of the clamper.
FIG. 14 is an exemplary diagram showing an example of alignment of hairpins according to an embodiment of a hairpin alignment apparatus.
FIG. 15 is a simplified exemplary diagram showing a configuration according to an embodiment of an alignment unit.
FIG. 16 is a simplified exemplary diagram showing the configuration according to an embodiment of a protection unit.
FIG. 17 is an exemplary diagram showing a result of aligning hairpins while a protection unit is provided.

### Mode for the Invention

Hereinafter, embodiments disclosed in this specification will be described in detail with reference to the accompanying drawings, but in describing the embodiments disclosed in this specification, when it is determined that a detailed description of related known technologies can obscure the subject matter of the embodiments disclosed in this specification, the detailed description will be omitted.

Furthermore, the accompanying drawings are provided only for a better understanding of the embodiments disclosed in this specification and are not intended to limit technical concepts disclosed in this specification, and therefore, it should be understood that the accompanying drawings include all modifications, equivalents and substitutes within the concept and technical scope of the present disclosure.

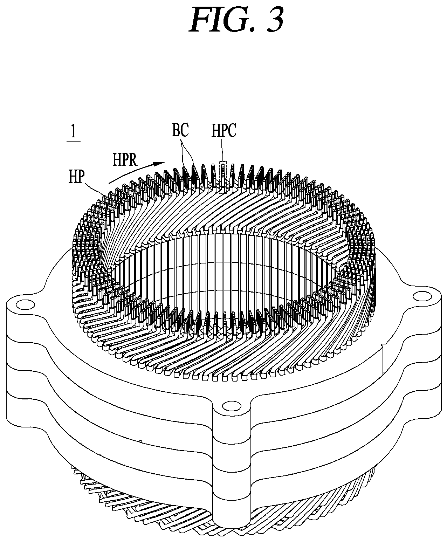

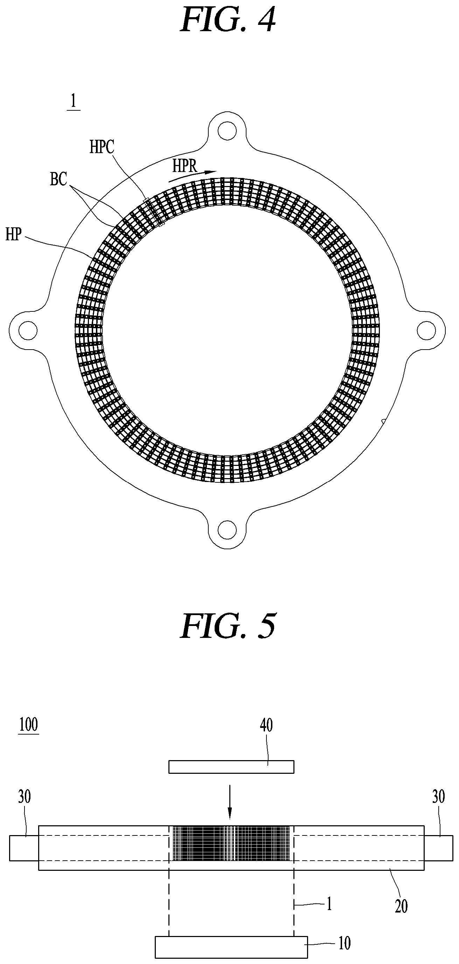

A hairpin alignment apparatus (hereinafter, referred to as an alignment apparatus) to be provided in this specification may be an apparatus for aligning hairpins HPs of a stator 1 as shown in FIG. 3 and FIG. 4.

The alignment apparatus may also be an apparatus for performing a welding process subsequent to aligning the hairpins HPs.

The stator 1 as shown in FIG. 3 may have a plurality of hairpins HPs protruding from a top thereof, which are arranged in a plurality of rows and a plurality of columns HPCs along an arc as shown in FIG. 4.

The plurality of hairpins HPs may be arranged in the plurality of rows at a regular interval.

That is, a row arrangement of the plurality of hairpins HPs may be configured with a constant row spacing.

The plurality of hairpins HPs may also be configured with the plurality of columns HPCs at a regular interval BC.

That is, the column arrangement HPC of the plurality of hairpins HPs may be configured with a constant column spacing BC.

In the stator 1 described above, the plurality of hairpins HPs may be arranged in even rows.

As such, the stator 1 in which the plurality of hairpins HPs are arranged in even rows may have the plurality of hairpins HPs welded in pairs.

In the stator 1, the positions of the protruding heads of the plurality of hairpins HPs, that is, the welding target portions, are not aligned and disturbed so as to generate welding defects when welding in an unaligned state.

Accordingly, the stator 1 requires alignment of the plurality of hairpins HPs prior to welding, and an embodiment of the alignment apparatus provided in this specification may be an apparatus for aligning the plurality of hairpins HPs of the stator 1.

More specifically, the alignment apparatus places clampers expanding horizontally between arrangements of the plurality of hairpins HPs, and inserts an alignment pin into the clampers to horizontally expand the clampers, thereby horizontally aligning the plurality of hairpins HPs for each pair of welding targets through the expanded clampers.

The alignment apparatus 100 includes a fixing unit 10, a clamping unit 20, and an alignment unit 30, as shown in FIG. 5.

The alignment apparatus 100 may also further include a cover unit 40 that protects insulation portions of the plurality of hairpins HPs when welding the plurality of hairpins HPs.

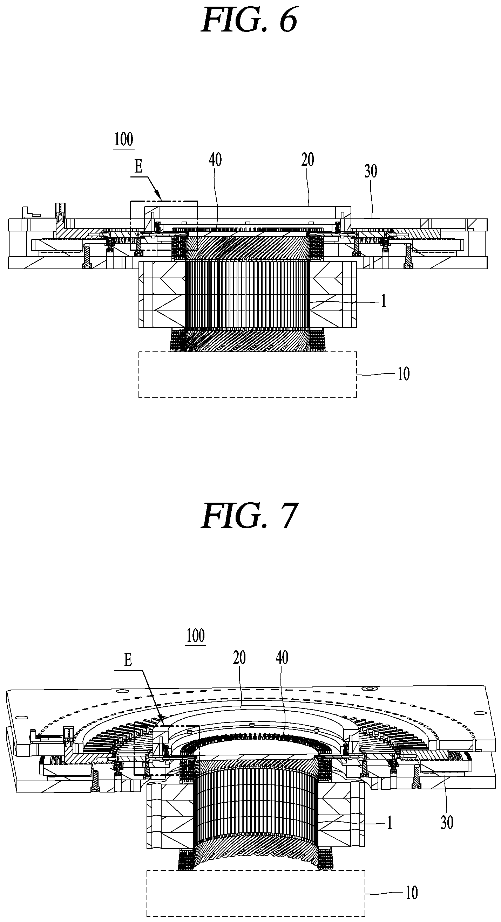

Specific examples of the alignment apparatus 100 including the fixing unit 10, the clamping unit 20, and the alignment unit 30, and further including the cover unit 40, may be as shown in FIGS. 6 to 9.

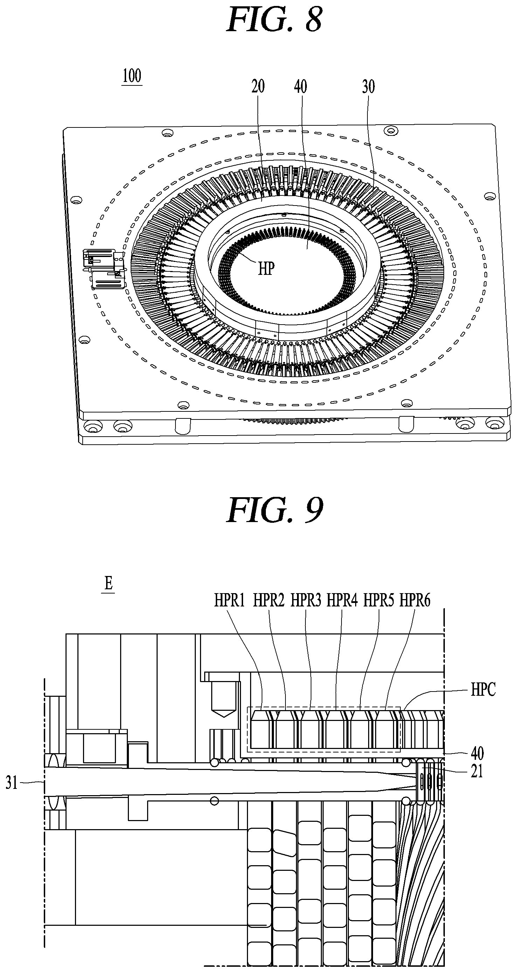

FIG. 6 is a front view of the alignment apparatus 100, FIGS. 7 and 8 are perspective views of the alignment apparatus 100 shown in FIG. 6, and as shown in FIGS. 6 to 8, in the alignment apparatus 100, the fixing unit 10 raises and fixes the stator 1 to a specific position, the clamping unit 20 includes a plurality of clampers 21, which are provided at positions respectively corresponding to between the plurality of columns, and respectively disposed between the plurality of columns when the stator 1 is raised to the specific position, and the alignment unit 30 includes a plurality of alignment pins 31, which are inserted into the respective insertion holes of the plurality of clampers 21, when the plurality of clampers 21 are respectively positioned between the plurality of columns, to horizontally expand the respective plurality of clampers 21 so as to come into close contact with hairpins HPs arranged in columns on both sides.

That is, for the alignment apparatus 100, when the fixing unit 10 raises the stator 1 to the specific position, the plurality of clampers 21 are respectively disposed between the plurality of columns of the plurality of hairpins HPs, and when the plurality of alignment pins 31 are respectively inserted into the plurality of clampers 21 while the plurality of clampers 21 are respectively disposed between the plurality of columns, the plurality of clampers 21 respectively expand horizontally due to the insertion of the plurality of alignment pins 31 to come into close contact with the hairpins HPs arranged on both sides, thereby aligning the plurality of hairpins HPs.

In an example of the alignment apparatus 100 as shown in FIGS. 6 to 8, a shape in which the plurality of clampers 21 and the alignment pin 31 are respectively disposed between the plurality of columns of the plurality of hairpins HPs may be as shown in FIG. 9.

FIG. 9 is an enlarged cross-sectional view of a portion E of FIGS. 6 and 7, in which when the plurality of hairpins HPs are arranged in six rows HPR1 to HPR6 to protrude vertically from a top of the clampers 21 and the cover unit 40, the clampers 21 are respectively disposed between a plurality of columns of the plurality of hairpins HPs at the specific position, and the alignment pin 31 is inserted from a rear end of the clampers 21 to horizontally expand the clampers 21 so as to align the hairpins HPs in columns on both sides of the clampers 21.

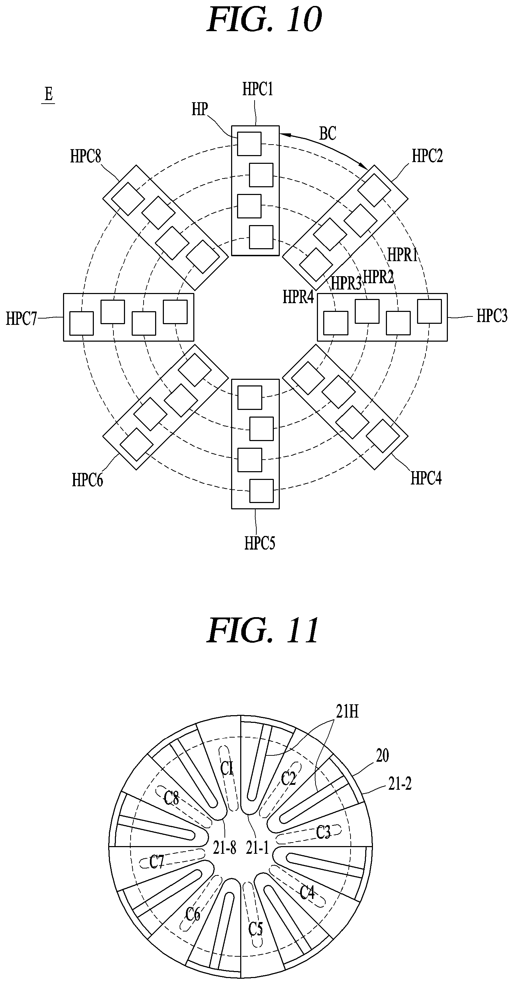

Hereinafter, a principle and structure of the alignment apparatus 100 that aligns the plurality of hairpins HPs will be described with reference to FIGS. 10 to 15, which simplify a configuration of the stator 1 and the alignment apparatus 100.

The fixing unit 10 raises and fixes the stator 1 from a bottom of the alignment apparatus 100 to the specific position.

The stator 1 may have the plurality of hairpins HPs protruding from a top thereof, which are arranged in the plurality of rows and the plurality of columns along an arc of the stator 1.

For example, as shown in FIG. 10, it may be arranged in four rows HPR1 to HPR4 and eight columns HPC1 to HPC8.

As such, the plurality of hairpins HPs arranged in the plurality of rows HPRs and the plurality of columns HPCs have protruding portions that are not aligned on which welding is performed, as shown in FIG. 10, so as to allow the positions of the plurality of hairpins HPs to be aligned by the alignment apparatus 100.

The fixing unit 10 may consist of one or more apparatuses and structures.

The fixing unit 10 may raise the stator 1 to the specific position when the stator 1 is settled, and fix the stator 1 to the specific position until the alignment of the plurality of hairpins HPs is completed.

The specific position may be a position where the plurality of hairpins HPs protrude by a predetermined length or more from positions where the plurality of clampers 21 are disposed, when the plurality of clampers 21 are respectively disposed between the plurality of columns HPCs.

That is, the fixing unit 10 may raise a position of the stator 1 to a height where the plurality of hairpins HPs protrude by a predetermined length or more than a height of the plurality of clampers 21.

Here, the predetermined length may be greater than or equal to a minimum welding required length of the plurality of hairpins HPs.

The minimum required welding length may be, for example, 4 [mm].

In this case, the fixing unit 10 may raise a position of the stator 1 to a height where the plurality of hairpins HPs protrude by 4 [mm] or more from a height of the plurality of clampers 21.

Accordingly, the alignment of the plurality of hairpins HPs may be performed while securing the welding target portions of the plurality of hairpins HPs.

In the alignment apparatus 100, the clamping unit 20 may consist of one or more apparatuses and structures.

The clamping unit 20 including the plurality of clampers 21 may be as shown in FIG. 11 when the stator 1 is as shown in FIG. 10.

The clamping unit 20 may be disposed in a circular shape larger than the stator 1.

In the clamping unit 20, the plurality of clampers 21 may be provided along a circumference of the clamping unit 20.

The plurality of clampers 21 may be provided so as to face the center of the stator 1 from an outer circumferential surface of the stator 1.

The plurality of clampers 21 may be provided at positions respectively corresponding to between the plurality of columns HPCs, and respectively disposed between the plurality of columns HPCs when the stator 1 is raised to the specific position.

For example, as shown in FIG. 10, when the plurality of hairpins HPs are arranged in eight columns HPC1 to HPC8, as shown in FIG. 11, a first clamper 21-1 to an eighth clamper 21-8 may be provided at positions respectively corresponding to between the eight columns HPC1 to HPC8, and when the stator 1 is raised to the specific position, the first clamper 21-1 to the eighth clamper 21-8 may be respectively disposed between the eight columns HPC1 to HPC8.

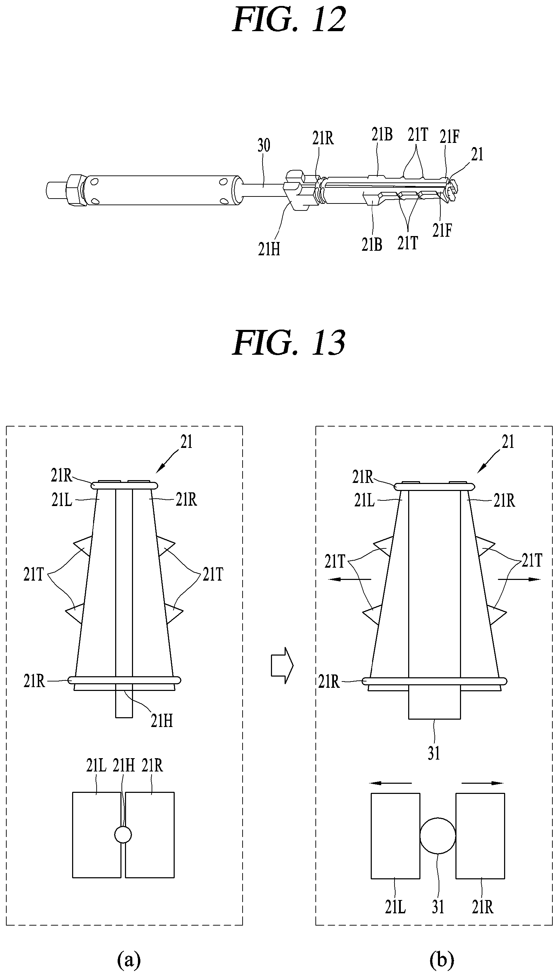

The shapes of the clamper 21 and the alignment pin 31 inserted into the clamper 21 may be as shown in FIG. 12.

The clamper 21 may have a left side portion 21L and a right side portion 21R, and an insertion hole 21H disposed between the left side portion 21L and the right side portion 21R into which the alignment pin 31 is inserted.

The clampers 21 may be provided at positions respectively disposed between the plurality of columns HPCs on an outer circumferential surface of the stator 1.

The clamper 21 may be disposed to have a length above a length of the plurality of columns HPCs.

The clamper 21 may have a front end disposed in a center direction of the stator 1 and a rear end disposed in a circumferential direction of the stator 1.

The clamper 21 may have a shape in which the width increases from the front end to the rear end.

That is, the clamper 21 may be disposed in a shape in which the width increases from the front end disposed in a center direction to the rear end disposed in a circumferential direction, according to a shape in which a column spacing of the plurality of hairpins HPs becomes narrower from the circumference toward the center.

The clamper 21 has the insertion hole 21H disposed at the rear end such that the alignment pin 31 can be inserted into the rear end and advanced toward the front end.

The clamper 21 may be expanded horizontally by a width of the alignment pin 21 when the alignment pin 31 is inserted into the rear end and advanced toward the front end.

That is, as shown in FIG. 13, when the alignment pin 31 is inserted into the insertion hole 21H, the left side portion 21L and the right side portion 21R of the clamper 21 may be expanded while horizontally increasing a gap due to the insertion of the alignment pin 31.

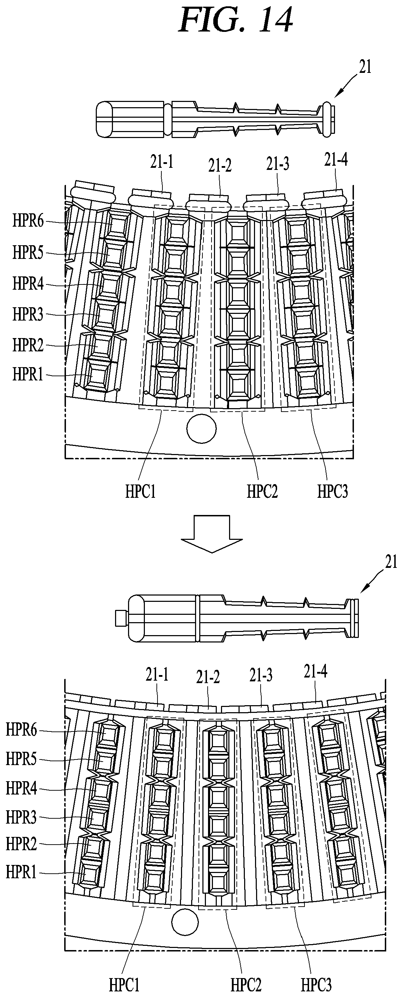

As such, when the clamper 21 is horizontally expanded due to the insertion of the alignment pin 31, as shown in FIG. 14, the left side portion 21L and the right side portion 21R of the clamper 21 may respectively come into contact with the hairpins HPs in both columns to apply force, thereby allowing the hairpins HPs to receive pressure from the clampers expanded on both sides and change their positions so as to perform horizontal alignment.

In addition, the clamper 21 may expand horizontally to align the plurality of hairpins HPs, thereby performing the alignment of the plurality of hairpins HPs regardless of their heights.

Accordingly, a height at which the clamper 21 aligns the plurality of hairpins HPs may be freely selected, thereby securing a space for providing welding target portions of the plurality of hairpins HPs and an additional element such as a protection cover.

The clamper 21 may have a front alignment stage 21F and a rear alignment stage 21B disposed on respective both sides of front and rear ends, which come into close contact with the hairpins (HP) when horizontally expanded.

The front alignment stage 21F and the rear alignment stage 21B may be disposed in a symmetrical structure on both sides of the clamper 21.

The clamper 21 may have a plurality of alignment teeth 21T corresponding to an arrangement of the plurality of rows HPRs disposed on both sides.

The alignment teeth 21T may be disposed in a symmetrical structure on both sides of the clamper 21 corresponding to the arrangement of the plurality of rows HPRs.

The alignment teeth 21T may be disposed at a predetermined interval in a number corresponding to a number of pairs of hairpins HPs arranged in the plurality of rows HPRs on respective both sides of the clamper 21.

Here, a number corresponding to the number of pairs may refer to the number of pairs -1.

For example, when the hairpins HPs are arranged in six rows and three pairs in the plurality of columns HPCs, two alignment teeth 21T may be disposed on respective both sides of the clamper 21.

That is, when the hairpins HPs are arranged in three pairs in the plurality of columns HPCs, the front alignment stage 21F, two alignment teeth 21T, and the rear alignment stage 21B may be disposed on respective both sides of the clamper 21, so that a pair of hairpins HPs may be respectively disposed between the front arrangement stage 21F and a first arrangement tooth 21T-1, the first arrangement tooth 21T-1 and a second arrangement tooth 21T-2, and the second arrangement tooth 21T-2 and the rear arrangement stage 21B.

The predetermined interval may be an interval at which the hairpins HPs arranged in the plurality of rows HPRs are sequentially aligned in pairs of two according to a row arrangement.

That is, the predetermined interval may be an interval corresponding to a length of two hairpins HPs in close contact.

Meanwhile, in the case where the hairpins HPs are arranged in two rows and one pair in the plurality of columns HPCs, the alignment teeth 21T may not be disposed on respective both sides of the clamper 21.

When the clamper 21 is horizontally expanded to come into contact with the hairpins HPs arranged in columns on both sides, the alignment teeth 21T may cause the hairpins HPs arranged in the plurality of rows HPRs to allow two of them to come into close contact with each other.

Accordingly, the hairpins HPs arranged in the plurality of rows HPRs may be aligned to allow two of them to come into close contact with each other in pairs for each pair of welding targets, thereby facilitating welding of the hairpins HPs.

More specifically describing the alignment of the hairpins HPs through the clamper 21 with reference to FIG. 14, while a second clamper 21-2 is disposed between a first row HPC1 and a second row HPC2, and a third clamper 21-3 is disposed between a second row HPC2 and a third row HPC3, when each of the alignment pins 31 is inserted into each of the plurality of clampers 21, each of the plurality of clampers 21 may expand horizontally, such that the hairpins HPs of the second row HPC2 come into contact with the right side portion 21R-1 of the first clamper 21-1 and the left side portion 21L-2 of the second clamper 21-2 on both sides so as to allow pressure to be applied from the right side portion 21R-1 of the first clamper 21-1 and the left side 21L-2 portion of the second clamper 21-2, respectively, and the hairpins HP arranged in six rows HPR1 to HPR6 are allowed two of them to come into close contact with each other by two alignment teeth 21Ts disposed on the right side portion 21R-1 of the first clamper 21-1 and the left side portion 21L-2 of the second clamper 21-2, respectively, so as to be aligned in three pairs HPR1 and HPR2, HPR3 and HPR4, HPR5 and HPR6.

Accordingly, the hairpins HPs arranged in the plurality of rows HPRs may be horizontally aligned for each pair of welding targets without changing the height, thereby facilitating welding of the plurality of hairpins HPs.

The clamper 21 may be provided with one or more O-rings 21R that expand when the alignment pin 31 is inserted and contract when the alignment pin 31 is extracted.

Accordingly, when the alignment pin 31 is inserted, the O-ring 21R may expand according to the expansion of the clamper 21, and when the alignment pin 31 is extracted, the clamper 21 may be restored to the pre-expansion state while the O-ring 21R contracts to the pre-expansion state.

At least one of the O-rings 21R may be provided at an end of the clamper 21.

The O-rings 21R may preferably be provided at front and end ends of the clamper 21, respectively.

In the alignment apparatus 100, the alignment unit 30 may consist of one or more apparatuses and structures.

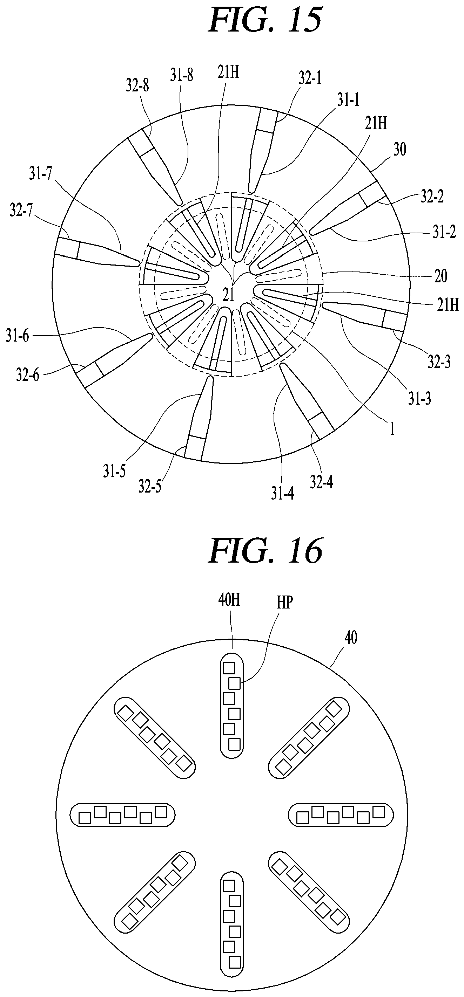

The alignment unit 30 including the plurality of alignment pins 31 may be as shown in FIG. 15 when the stator 1 is as shown in FIG. 10.

The alignment unit 30 may be disposed in a circular shape larger than the stator 1.

In the alignment unit 30, the plurality of alignment pins 31 may be provided along a circumference of the alignment unit 30.

The plurality of alignment pins 31 may be provided so as to face the center of the stator 1 from an outer circumferential surface of the stator 1.

The plurality of alignment pins 31 may be provided at positions corresponding to the plurality of clampers 21, respectively.

For example, as shown in FIG. 10, when the plurality of hairpins HPs are arranged in eight rows HPC1 to HPC8, as shown in FIG. 15, a first alignment pin 31-1 to an eighth alignment pin 31-8 may be provided at positions respectively corresponding to the plurality of clampers 21 respectively corresponding to between the eight rows HPC1 to HPC8.

As shown in FIG. 15, when the plurality of clampers 21 are respectively disposed between the plurality of columns HPCs, as shown in FIG. 13, the plurality of alignment pins 31 may be respectively inserted into the insertion holes 21H of the plurality of clampers 21, such that the respective plurality of clampers 21 may be horizontally expanded to come into close contact with the hairpins HPs arranged in columns on both sides.

The alignment unit 30 may include a plurality of alignment pins 31, and may further include a driving element 32 for driving the respective plurality of alignment pins 31.

The driving element 32 may move the plurality of alignment pins 31 to be inserted into or extracted from the insertion holes 21H.

The driving element 32 may be an air/hydraulic cylinder or a motor, which is an element that insert the alignment pins 31 into the insertion holes 21H to move forward, or extract the alignment pins 31 from the insertion holes 21H to move backward.

The driving element 32 may insert, when the fixing unit 10 raises the stator 1 to the specific position to allow the plurality of clampers 21 to be respectively disposed between the plurality of columns HPCs, the respective plurality of alignment pins 31 into the respective insertion holes 21H of the corresponding clampers 21.

The driving element 32 may insert the respective plurality of alignment pins 31 into the respective insertion holes 21H of the corresponding clampers 21, and when the respective plurality of clampers 21 are horizontally expanded, the respective plurality of alignment pins 31 may be extracted from the insertion holes 21H to restore the respective plurality of clampers 21.

The alignment pins 31 may be inserted into and extracted from the insertion holes 21H by the driving element 32 that moves the positions of the alignment pins 31.

The alignment pin 31 may be inserted into the insertion hole 21H to move forward at a constant speed.

Accordingly, the clamper 21 may be expanded at a constant speed.

As such, as the alignment pin 31 is inserted into the insertion hole 21H to moves forward at a constant speed, the clamper 21 may expand at a constant speed so as to prevent impact on the hairpin HP due to high-speed expansion of the clamper 21.

That is, the alignment of the hairpin HP may be prevented from being disturbed by impact applied to the hairpin HP due to high-speed expansion of the clamper 21, thereby accurately performing the alignment of the hairpin HP.

The alignment pins 31 may be simultaneously inserted into the insertion holes 21H of the respective plurality of clampers 21.

Accordingly, the plurality of clampers 21 may be expanded horizontally simultaneously.

As such, the alignment pins 31 may be simultaneously inserted into the insertion holes 21H of the respective plurality of clampers 21, thereby preventing an unbalanced force from being applied to the hairpins HPs due to a difference in expansion speed between the plurality of clampers 21.

That is, the alignment of the hairpins HP may be prevented from being disturbed by an unbalanced force being applied to the hairpins HPs due to a difference in expansion speed between the plurality of clampers 21, thereby accurately performing the alignment of the hairpins HPs.

The alignment pin 31 may be inserted into the insertion hole 21H to maintain an inserted state for a predetermined period of time subsequent to horizontally expanding the clamper 21.

Here, the predetermined period of time may be a period of time during which the respective plurality of clampers 21 come into close contact with the plurality of hairpins HPs and the alignment of the plurality of hairpins HPs is completed.

The alignment pins 31 may also be maintained in an inserted state until the welding of the plurality of hairpins HPs is completed after the alignment of the plurality of hairpins HPs is completed.

The alignment pin 31 may be disposed with a horizontal width less than a sum of distances between both sides of the clamper 21 and both columns of the hairpins HPs when the clamper 21 is disposed between the two columns.

That is, the clamper 21 may be horizontally expanded by a width of the alignment pin 31 disposed with a horizontal width less than a sum of distances between both sides of the clamper 21 and both columns of the hairpins HPs.

Meanwhile, the alignment apparatus 100 including the fixing unit 10, the clamping unit 20, and the alignment unit 30 may further include the cover unit 40 that protects the plurality of hairpins HPs from spatter generated during welding when welding the plurality of hairpins HPs subsequent to aligning the plurality of hairpins HPs, thereby protecting insulation portions of the plurality of hairpins HPs from spatter when welding the plurality of hairpins HPs.

The cover unit 40 may be a cover covering a top of the stator 1, as shown in FIGS. 5 to 9.

The cover unit 40 may be as shown in FIG. 16 when the stator 1 is as shown in FIG. 10.

The cover unit 40 has a plurality of protruding holes 40Hs disposed at positions respectively corresponding to arrangements of the plurality of columns HPCs, and thus, when the stator 1 is positioned at the specific position, the plurality of hairpins HPs may protrude by passing through the plurality of protruding holes 40Hs.

For example, when the plurality of columns HPCs consist of eight HPC1 to HPC8, eight protruding holes 40Hs may be disposed at positions respectively corresponding to the plurality of columns HPCs.

Accordingly, as shown in FIG. 16, the hairpins HPs arranged in the plurality of columns HPCs may protrude to a top of the cover unit 40 through the protrusion holes 40Hs.

The cover unit 40 may have a disc shape provided on a top of the plurality of clampers 21.

The cover unit 40 may allow the plurality of hairpins HPs to pass through the protruding holes 40Hs so as to protrude from the protruding holes 40Hs by a predetermined length or more.

The predetermined length may be, for example, 4 [mm].

That is, the plurality of hairpins HPs may pass through the protruding holes 40Hs to protrude by 4 [mm] or more.

The protruding holes 40Hs may be disposed to have an area exceeding an area of one column HPC of the hairpins HPs, but within 1.2 times the area.

Accordingly, an area protecting the plurality of hairpins HPs from the spatter may be maximized, thereby performing stable welding.

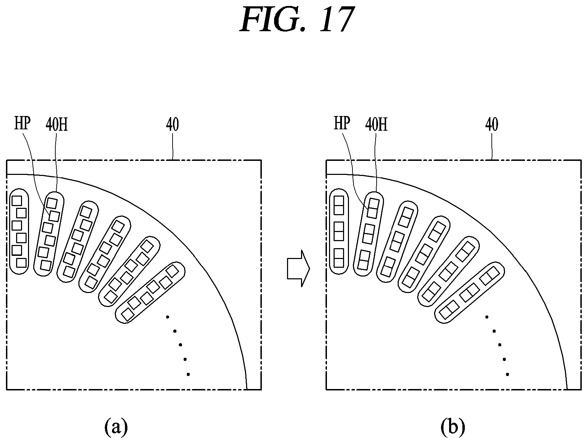

The plurality of hairpins HPs may be aligned as shown in FIG. 17 even when the cover unit 40 is disposed on a top of the clamping unit 20.

FIG. 17 is an exemplary diagram showing a case where the cover unit 40 is provided and the plurality of hairpins HPs are aligned while protruding through the protrusion holes 40Hs, in which among the plurality of hairpins HPs, only the protruding portions corresponding to the welding target portions are aligned in pairs by the clamping unit 20 while protruding from a top of the cover unit 40, and insulating portions excluding the protruding portions may be protected from welding at a bottom of the cover unit 40.

The alignment apparatus 100 may align the plurality of hairpins HPs for each pair of welding targets without changing the height in a horizontal alignment manner through the clampers 21, thereby facilitating welding, and also allowing the cover unit 40 to be provided while securing the structure of the cover unit 40.

Accordingly, the alignment and welding accuracy of the plurality of hairpins HPs may be improved, and insulation portions of the plurality of hairpins HPs may be protected from welding spatter, thereby increasing safety and reliability.

Although embodiments of the alignment apparatus 100 have been described so far, the described embodiments may be modified in various ways without departing from the scope of the present disclosure, and the scope of the present disclosure should not be limited to the described embodiments, but should be defined not only by the claims described below but also by equivalents of the claims.

## Claims

1. A hairpin alignment apparatus, the apparatus comprising:
a fixing unit that raises and fixes a stator having a plurality of hairpins protruding from a top thereof, which are arranged in a plurality of rows and a plurality of columns along an arc, to a specific position;
a clamping unit including a plurality of clampers provided at positions respectively corresponding to between the plurality of columns, and respectively disposed between the plurality of columns when the stator is raised to the specific position; and
an alignment unit including a plurality of alignment pins that are inserted into insertion holes of the respective plurality of clampers when the plurality of clampers are respectively positioned between the plurality of columns to horizontally expand the respective plurality of clampers so as to come into close contact with the hairpins arranged in columns on both sides.

2. The apparatus of claim 1, wherein the stator have the plurality of hairpins arranged in even rows.

3. The apparatus of claim 1, wherein the specific position is a position where the plurality of hairpins protrude to a predetermined length or more from positions where the plurality of clampers are disposed when the plurality of clampers are respectively disposed between the plurality of columns.

4. The apparatus of claim 1, wherein the respective plurality of clampers have a front end disposed in a center direction of the stator and a rear end disposed in a circumferential direction of the stator.

5. The apparatus of claim 1, wherein the respective plurality of clampers have a shape in which the width increases from the front end to the rear end.

6. The apparatus of claim 1, wherein the respective plurality of clampers have the insertion hole disposed at the rear end such that the alignment pin is inserted into the rear end, advances toward the front end, and expands horizontally by a width of the alignment pin.

7. The apparatus of claim 1, wherein the respective plurality of clampers have a plurality of alignment teeth on both sides disposed corresponding to the arrangement of the plurality of rows.

8. The apparatus of claim 7, wherein the alignment teeth are disposed at a regular interval in a number corresponding to a number of pairs of hairpins arranged in the plurality of rows on respective both sides of the clamper.

9. The apparatus of claim 7, wherein when the clamper is horizontally expanded to come into contact with the hairpins arranged in columns on both sides, the alignment teeth cause the hairpins arranged in the plurality of rows to allow two of them to come into close contact with each other.

10. The apparatus of claim 1, wherein the respective plurality of clampers are provided with one or more O-rings that expand when the alignment pin is inserted and contract when the alignment pin is extracted.

11. The apparatus of claim 10, wherein at least one of the O-rings is provided at an end of the clamper.

12. The apparatus of claim 1, wherein the alignment unit further includes a driving element that moves the plurality of alignment pins so as to be inserted into or extracted from the insertion holes.

13. The apparatus of claim 1, wherein the plurality of alignment pins are inserted into the insertion holes to move forward at a constant speed.

14. The apparatus of claim 1, wherein the plurality of alignment pins are simultaneously inserted into the respective insertion holes of the plurality of clampers.

15. The apparatus of claim 1, wherein the plurality of alignment pins are inserted into the insertion holes so as to allow the plurality of clampers to be horizontally expanded, and then maintained in an inserted state for a predetermined period of time.

16. The apparatus of claim 1, wherein the plurality of alignment pins are disposed with a horizontal width less than a sum of distances between both sides of the clamper and both columns of hairpins when the clamper is disposed between the both columns.

17. The apparatus of claim 1, further comprising:
a cover unit in which a plurality of protruding holes are disposed at positions respectively corresponding to arrangements of the plurality of columns so as to allow the plurality of hairpins to protrude by passing through the plurality of protruding holes when the stator is positioned at the specific position.

18. The apparatus of claim 17, wherein the cover unit has a disc shape provided on a top of the plurality of clampers.

19. The apparatus of claim 17, wherein the cover unit allows the plurality of hairpins to pass through the protruding holes so as to protrude from the protruding holes by a predetermined length or more.

20. The apparatus of claim 17, wherein the protruding hole is disposed to have an area exceeding an area of one column of the hairpins, but within 1.2 times the area.
